Europäisches Patentamt

European Patent Office

Office européen des brevets

(11) Veröffentlichungsnummer: **0 297 031**
A1

## (12) EUROPÄISCHE PATENTANMELDUNG

(21) Anmeldenummer: 88810324.9

(22) Anmeldetag: 20.05.88

(51) Int. Cl.⁴: **B 23 Q 17/22**
B 23 K 9/12

(30) Priorität: 16.06.87 CH 2266/87

(43) Veröffentlichungstag der Anmeldung:
28.12.88 Patentblatt 88/52

(84) Benannte Vertragsstaaten:
CH DE FR GB IT LI SE

(71) Anmelder: C.A. Weidmüller GmbH & Co.
Klingenbergstrasse 16
D-4930 Detmold (DE)

(72) Erfinder: Vornfett, Karl Ulrich
Krippenhof 20
D-7570 Baden-Baden (DE)

(74) Vertreter: Hepp, Dieter et al
HEPP & Partner AG Marktgasse 18
CH-9500 Wil (CH)

(54) Werkzeug mit einer Sensorvorrichtung.

(57) Das Werkzeug (1) ist von einem taktilen Fühler (4), vorzugsweise in der Form einer konzentrischen Hülse umgeben. Der Fühler ist in der Mittelachse (5) des Werkzeuges (1) sowie im Winkel zur Mittelachse auslenkbar. Ein federelastisches Glied (6) sorgt dafür, dass der taktile Fühler (4) in seiner konzentrischen Lage verbleibt bzw. nach einer Auslenkung immer wieder in diese zurückkehrt. Ueber Dehnungsmessstreifen (7) am federelastischen Glied wird ein der Auslenkung analoges Signal gebildet. Dieses Signal dient dazu, beim Antasten eines Werkstückes den tatsächlichen Werkzeug-Nullpunkt zu ermitteln.

Fig. 2

EP 0 297 031 A1

# Beschreibung

## Werkzeug mit einer Sensorvorrichtung

Die Erfindung bezieht sich auf ein Werkzeug mit einer Sensorvorrichtung gemäss dem Oberbegriff von Anspruch 1. Derartige Vorrichtungen dienen dazu, bei Bearbeitungsrobotern die genaue Positionierung eines Werkzeuges, wie z.B. einer Schweissdüse für das Lichtbogenschweissen, zu ermöglichen. Dies erfordert neben der möglichst genauen Hinführung des Werkzeuges zum Werkstück auch in vielen Fällen zusätzliche Sensorfunktionen, um bei unterschiedlichen Werkstücklagen und -toleranzen die gewünschte Relativlage des Werkzeuges zur optimalen Bearbeitung des Werkstückes möglichst genau zu erreichen, auch wenn der Roboter die gewünschte Position durch sein Programm nicht genau einstellen kann, weil er die Abweichungen nicht selbst erkennt.

Es sind bereits vergleichbare Vorrichtungen bekannt, bei denen das Werkzeug selbst als taktiler Sensor ausgebildet ist, indem es beweglich an der Werkzeughalterung befestigt ist, so dass es beim Antasten des Werkstückes auslenkbar ist. Ueber geeignete Schaltvorrichtungen wie z.B. Mikroschalter wird dann bei einer Auslenkung des Werkzeuges der Antrieb für die Werkzeughalterung abgeschalten, so dass die Werkzeughalterung mit dem Werkzeug stillsteht. Anschliessend beginnt dann aus dieser Relativlage der eigentliche Bearbeitungsvorgang.

Diese Lösungen haben jedoch den Nachteil, dass das Werkzeug für den Schaltvorgang bereits eine bestimmte Auslenkung erfahren muss, bevor es stillsteht. Damit macht jedoch das Werkzeug gegenüber seiner ursprünglichen programmierten Stellung bereits eine Lageveränderung durch, die beim späteren Bearbeitungsvorgang zu Fehlern führen kann. Insbesondere beim Arbeiten im Arbeitsraum eines Roboters mit mehreren Freiheitsgraden kann dies zu einer unzulässigen Verschiebung des Werkzeugnullpunktes (Tool Center Point) führen.

Es ist daher eine Aufgabe der Erfindung, ein Werkzeug mit einer Sensorvorrichtung der eingangs genannten Art zu schaffen, bei dem keine unnötigen Werkzeugauslenkungen erforderlich sind, um die Sensorvorrichtung zu betätigen. Der Werkzeugnullpunkt soll dabei auf einfachste Weise durch Berührung des Werkstückes ermittelt werden. Diese Aufgabe wird erfindungsgemäss mit einem Werkzeug gelöst, dass die Merkmale im Anspruch 1 aufweist.

Ersichtlicherweise wird bei der erfindungsgemässen Lösung nicht mehr das Werkzeug selbst, sondern der das Werkzeug umgebende taktile Fühler ausgelenkt. Das Werkzeug selbst erfährt beim Antastvorgang an das Werkstück keine Auslenkung. Dies hat insbesondere bei Schweissvorrichtungen den Vorteil, dass die relativ grosse Masse inklusive der zum Werkzeug führenden Kabel nicht durch eine zusätzliche mechanische Vorrichtung in einer neutralen Lage gehalten werden muss. Dagegen lässt sich der separate taktile Fühler viel besser kontrollieren, so dass schon geringe Kräfte für eine Auslenkung bzw. für die entsprechende Signalbildung genügen. Bei der Auslenkung des taktilen Fühlers kann ein zur Auslenkung analoges elektrisches Signal gebildet werden, dass dann der Robotersteuerung zugeführt werden kann. Dieses Signal bewirkt einerseits, dass der Antrieb für die Werkzeughalterung abgeschaltet wird. Anderseits bewirkt dieses Signal aber auch eine Korrektur der Steuerungspositionierungsdaten des Roboters zur werkstückgerechten Verschiebung der Sollposition in die tatsächliche Position. Die programmierten Positionsdaten des Werkzeugnullpunktes werden dabei mit den auslenkungsanalogen Signalen des taktilen Fühlers überlagert.

Besonders vorteilhaft ist der taktile Fühler eine konzentrische Hülse, die im Abstand zum Werkzeug angeordnet ist. Auf diese Weise wird zwischen Werkzeug und Hülse ein Ringkanal gebildet, der zu Kühlzwecken genutzt werden kann. So kann beispielsweise bei einem Schweisswerkzeug Schutzgas in den Ringkanal eingeleitet werden, so dass auch die Aussenwand des Werkzeuges gekühlt wird.

Eine besonders einfache Bauweise ergibt sich, wenn der taktile Fühler über ein federelastisches Glied am Werkzeug befestigt ist, welches den taktilen Fühler in einer neutralen Lage stabilisiert. Je nach Elastizität des federelastischen Gliedes, genügen bereits geringste Kräfte für eine Auslenkung des Fühlers.

Eine besonders einfache Messung der Auslenkung kann erreicht werden, wenn das federelastische Glied ringförmig ausgebildet ist und zur Signalbildung mit über den Umfang verteilten Dehnungsmessstreifen versehen ist. Mit Hilfe der Dehnungsmessstreifen lässt sich auf optimal einfache Weise sowohl eine Verschiebung in der Werkzeugachse als auch eine seitliche Auslenkung im Winkel zur Werkzeugachse exakt messen. Die Verwendung von Dehnungsmessstreifen an einem taktilen Sensor ist dem Fachmann bekannt und wird beispielsweise in der DE-C-16 38 048 beschrieben.

Weitere Vorteile lassen sich erzielen, wenn der taktile Fühler mittels einer Klemmvorrichtung am Werkzeug fixierbar ist. Der taktile Fühler kann so mit wenigen Handgriffen am Werkzeug befestigt werden, so dass beispielsweise auch bestehende Werkzeuge ohne Sensorvorrichtung nachträglich umgerüstet werden können.

Ein Ausführungsbeispiel der Erfindung ist in den Zeichnungen dargestellt und wird nachstehend genauer beschrieben. Es zeigen:

Figur 1 einen Querschnitt durch eine Schweissdüse mit den Merkmalen der Erfindung und

Figur 2 die Schweissdüse gemäss Figur 1 mit ausgelenktem Fühler.

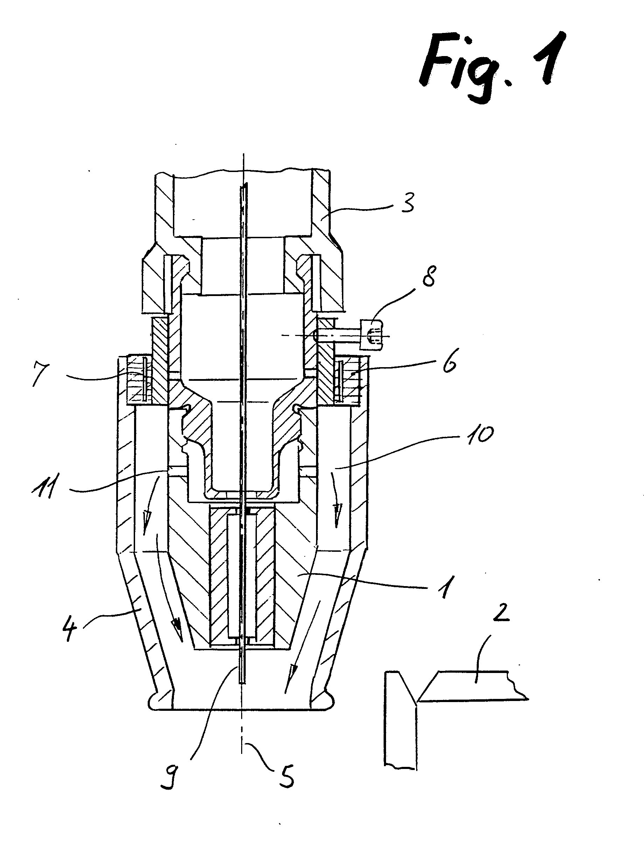

Wie in Figur 1 dargestellt, ist das Werkzeug 1 im vorliegenden Fall eine Schweissdüse, die an der rohrförmigen Werkzeughalterung 3 befestigt ist. Im Zentrum der Schweissdüse ist der Schweissdraht 9 geführt, der beim Schweissvorgang auf bekannte Art und Weise nachgeschoben wird. Die Werkzeughalterung 3 kann beispielsweise der Arm eines nicht näher dargestellten Roboters mit mehreren Freiheitsgraden sein.

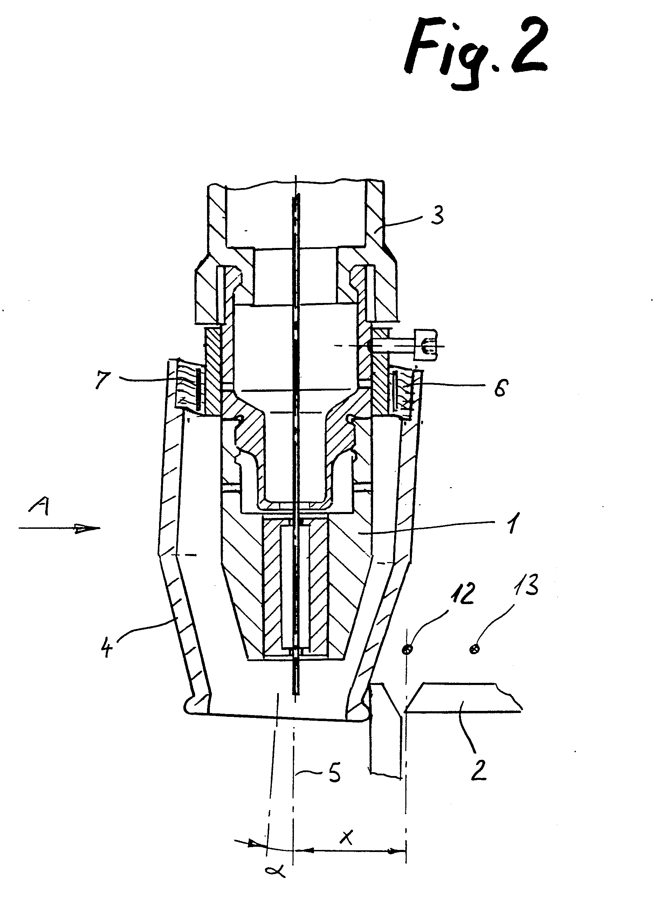

Auf die Schweissdüse 1 ist mit Hilfe einer Klemmvorrichtung 8 der taktile Fühler 4 in der Form einer konzentrischen Hülse befestigt. Die Klemmvorrichtung 8 kann wie dargestellt eine oder mehrere Klemmschrauben aufweisen. Sie kann aber auch einen Kniehebelverschluss, einen Bajonettverschluss oder dergleichen aufweisen. Der taktile Fühler 4 ist an einem federelastischen Glied 6 befestigt, dass im vorliegenden Ausführungsbeispiel ringförmig ausgebildet ist. Dieses federelastische Glied erlaubt eine Verschiebung in der Mittelachse 5 der Schweissdüse und im Winkel zu dieser Mittelachse, wie aus Figur 2 ersichtlich ist. Das federelastische Glied hat ausserdem die Aufgabe, den taktilen Fühler 4 in einer neutralen, zur Mittelachse 5 konzentrischen Position zu halten.

Ueber den Umfang des elastischen Gliedes verteilt sind beispielsweise vier Dehnungsmessstreifen 7 angeordnet, die mit einem nicht näher dargestellten Messwertumformer zur Bildung eines der Auslenkung analogen Signals verbunden sind. Anstelle der Dehnungsmessstreifen könnten selbstverständlich auch andere geeignete Mittel zur Erzeugung eines Analogsignals verwendet werden. Denkbar wären z.B. Piezoelemente, Hallgeneratoren und dergleichen.

Wie dargestellt wird zwischen der Schweissdüse 1 und dem taktilen Fühler 4 ein Ringkanal 10 gebildet, der auch zu Kühlzwecken ausgenützt werden kann. Zu diesem Zweck wird beispielsweise über eine Oeffnung 11 Schutzgas in den Ringkanal 10 geleitet, welches nach unten strömt und so die Oberfläche der Schweissdüse kühlt.

In Figur 2 ist dargestellt, wie die Schweissdüse 1 an der Werkzeughalterung 3 in Pfeilrichtung A gegen das Werkstück 2 bewegt wird. Das Werkstück besteht dabei aus zwei Blechen, welche entlang einer Schweissnaht zusammengeschweisst werden sollen. Für den Beginn des Schweissvorganges soll die Schweissdüse 1 an den von der tatsächlichen Lage des Werkstücks 2 abhängigen idealen Werkzeug-Nullpunkt 12 geführt werden. Der durch den Roboter programmierte Werkzeug-Nullpunkt liegt jedoch bei 13, der einer theoretischen Werkstück-Sollposition entspricht, so dass ohne zusätzliche Korrektur der Schweissvorgang an einer ungeeigneten Stelle beginnen würde. Beim Anfahren an das Werkstück 2 wird nun wie dargestellt der taktile Fühler 4 ausgelenkt, so dass dieser in einem Winkel Alpha zur Mittelachse 5 der Schweissdüse steht. Die Auslenkung des taktilen Fühlers bewirkt ein Abschalten des Vorschubes der Werkzeughalterung und die Dehnungsmessstreifen 7 erzeugen gleichzeitig ein der Auslenkung analoges Signal, so dass der Rechner die tatsächliche Relativlage der Schweissdüse 1 bzw. die Distanz X zum idealen Werkzeug-Nullpunkt 12 ermitteln kann. Das Rechnerprogramm wird nun so korrigiert, dass die Schweissdüse 1 vor dem Beginn des Schweissvorgangs den Werkzeug-Nullpunkt 12 und nicht den Werkzeug-Nullpunkt 13 anläuft. Die Schweissdüse 1 folgt nun programmgesteuert dem Werkstück 2, bis der Schweissvorgang beendet ist.

Der auslenkbare taktile Fühler 4 hat dabei den zusätzlichen Vorteil, dass er auch als Kollisionsschutz verwendet werden kann. Stösst das Werkzeug während des Bearbeitungsvorganges nämlich auf ein Hindernis, bzw. kollidiert es mit dem Werkstück, so kann durch die Auslenkung des taktilen Fühlers eine Stillsetzung des Vorschubes ausgelöst werden. Damit wird verhindert, dass das Werkzeug selbst beschädigt wird. Die Auslenkung des Fühlers 4 genügt dabei, um den Bremsweg bis zur endgültigen Stillsetzung des Werkzeuges 1 zu überwinden.

Wird der Fühler 4 gegenüber den übrigen Bauteilen entweder als Ganzes oder nur mit einem Teil des Fühlers elektrisch isoliert angeordnet, so kann der Fühler auch noch als kapazitive Elektrode eingesetzt werden. Mit dieser Elektrode könnte ebenfalls ein - nicht taktiler - Havarieschutz bewirkt werden. Auch eine Abstandsregelung wäre über eine derartige Elektrode möglich.

**Patentansprüche**

1. Werkzeug (1) mit einer Sensorvorrichtung zur Ermittlung der Relativlage zwischen dem Werkzeug (1) und einem Werkstück (2), wobei das Werkzeug (1) an einer Werkzeughalterung (3) in verschiedenen Freiheitsgraden beweglich ist, dadurch gekennzeichnet, dass das Werkzeug (1) relativ starr an der Werkzeughalterung (3) befestigt ist und die Sensorvorrichtung einen das Werkzeug (1) umgebenden taktilen Fühler (4) aufweist, der zur Bildung eines Mess- und Steuerimpulses in der Mittelachse (5) und/oder im Winkel zur Mittelachse des Werkzeuges (1) auslenkbar ist.

2. Werkzeug nach Anspruch I, dadurch gekennzeichnet, dass der taktile Fühler (4) eine konzentrische Hülse ist, die im Abstand zum Werkzeug (1) angeordnet ist.

3. Werkzeug nach Anspruch I oder 2, dadurch gekennzeichnet, dass der taktile Fühler über ein federelastisches Glied (6) am Werkzeug (1) befestigt ist, welches den taktilen Fühler in einer neutralen Lage stabilisiert.

4. Werkzeug nach Anspruch 3, dadurch gekennzeichnet, dass das federelastische Glied (6) ringförmig ausgebildet ist und zur Signalbildung mit über den Umfang verteilten Dehnungsmessstreifen (7) versehen ist.

5. Werkzeug nach einem der Ansprüche 1 bis 4, dadurch gekennzeichnet, dass der taktile Fühler mittels einer Klemmvorrichtung (8) am Werkzeug fixierbar ist.

0297031

*Fig. 1*

Fig.2

0297031

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | GB-A- 708 411 (ONSRUD) <br> * Anspruch 4 * <br> --- | 1,2 | B 23 Q 17/22 <br> B 23 K 9/12 |
| A | US-A-3 644 049 (HAHN) <br> --- | 1 | |
| A | FR-A-2 123 272 (HECKERT) <br> --- | 1 | |
| A | FR-A-2 555 091 (HITACHI) <br> --- | 1 | |
| A | FR-A-2 555 083 (DASSAULT) <br> --- | 1 | |
| A | US-A-4 242 017 (DE FAZIO) <br> --- | 1 | |
| A | JP-A-59 082 172 (MITSUBISHI) <br> ----- | 1 | |

RECHERCHIERTE
SACHGEBIETE (Int. Cl.4)

B 23 Q
G 05 B
B 23 K

Der vorliegende Recherchenbericht wurde für alle Patentansprüche erstellt

| Recherchenort | Abschlußdatum der Recherche | Prüfer |
|---|---|---|
| DEN HAAG | 30-09-1988 | DE GUSSEM J.L. |